# EUROPEAN PATENT APPLICATION

(11) **EP 3 644 250 A1**
(43) Date of publication of application: **29.04.2020**
(21) Application number: 19201273.0
(22) Date of filing: 03.10.2019
(51) Int. Cl.: G06Q 10/08

(54) **APPARATUS AND METHOD FOR VERIFYING A SHIPPING LOAD**

(30) Priority: 25.10.2018 US 201816171130
(71) Applicant: BlackBerry Limited, Waterloo, Ontario N2K 0A7 (CA)
(72) Inventor: AYOUB, Sameh, Waterloo, Ontario N2K 0A7 (CA)
(74) Representative: Hanna Moore + Curley

(57) **Abstract**

A method and apparatus for verifying a load in a container includes detecting a detected load volume of the load within the container, comparing the detected load volume to an expected load volume of the load, and in response to determining a mismatch between the detected load volume and the expected load volume, transmitting an alert.

## Description

### FIELD

The present disclosure relates determining verifying a shipping load.

### BACKGROUND

In transportation of goods, a load, such as a particular shipment of goods, is typically loaded into a container, such as a standard container, a trailer of a transport, a railcar, or the like. In some circumstances, a load may include multiple portions that are loaded separately. It may be a challenge to verify whether the load is correctly loaded into the container.

Improvements in determining the verifying a shipping load are desired.

### SUMMARY

Accordingly there is provided a method, an apparatus and a computer program as detailed in the claims that follow.

### BRIEF DESCRIPTION OF THE DRAWINGS

Embodiments of the present disclosure will now be described, by way of example only, with reference to the attached Figures.
FIG. 1 is a block diagram of an example wireless node network in accordance with the present disclosure;
FIG. 2A is a block diagram of an node of a wireless node network in accordance with the present disclosure;
FIG. 2B is a block diagram of an example gateway of a wireless node network in accordance with the present disclosure;
FIG. 3 is a flowchart illustrating a method for wirelessly transmitting power from a primary node to a secondary node in accordance with an embodiment of the present disclosure;
FIG. 4 is a rear plan view of an example container including cameras for verifying a shipping load in accordance with the present disclosure; and
FIG. 5 is a plan view of an example inside wall of a container including visual indicators for verifying a shipping load in accordance with the present disclosure.

### DETAILED DESCRIPTION

The present disclosure provides an apparatus and method for verifying a shipping load. In an embodiment, the present disclosure provides a method for a transport management system to verify a load in a container that includes determining a detected load volume of the load within the container, comparing the detected load volume to an expected load volume of the load, in response to determining a mismatch between the detected load volume and the expected load volume, transmitting an alert.

In an example embodiment, the container includes at least one camera mounted within the container, and a plurality of visual indicators located on inner surfaces of the container, each visible indicator located at a known location within the container, and determining the detected load volume includes receiving at least one image from the at least one camera mounted inside of the container, based on the number of visual indicators visible in the image, determining an empty volume of the container, determining the determined load volume based on the empty volume and a total volume of the container.

In an example embodiment, the at least one image is captured by the camera in response to detecting that a door of the container has moved to a closed position.

In an example embodiment, the plurality of visual indicators are different colors such that different colors indicate a different distance from an end of the container.

In an example embodiment, determining a mismatch between the detected load volume and the expected load volume includes determining that a difference between the detected load volume and the expected load volume meets a threshold.

In an example embodiment, transmitting the alert includes transmitting a notification to an electronic device associated with a driver or a dispatcher associated with the container, or transmitting a signal to disable a vehicle that is associated with the container.

In an example embodiment, the method includes comparing the detected load volume to a previous detected load volume to determine a change in load volume, comparing the change in load volume to the expected change in load volume, in response to determining a match between the change in load volume and the expected change in load volume, updating a status field in a database for a shipper order associated with the load.

In an example embodiment, when the change in load volume indicates that the load has been removed from the container, updating the status includes updating the status to indicate that the load has been delivered, and when the change in load volume indicates that the load has been added to the container, updating the status includes updating the status to indicate that the load is shipped.

In an example embodiment, the method includes determining a location of the container when the change in load volume is determined, and comparing the determined location with an expected location associated with the load, and updating the status includes updating the status in response to determining a match between the determined location and the expected location.

In another embodiment, the present disclosure provides an apparatus to verify a load in a container that includes a processor configured to determine a detected load volume of the load within the container, compare the detected load volume to an expected load volume of the load, in response to determining a mismatch between the detected load volume and the expected load volume, transmitting an alert.

In an example embodiment, the container includes at least one camera mounted within the container, and a plurality of visual indicators located on inner surfaces of the container, each visible indicator located at a known location within the container, and the processor configured to determine a detected the load volume includes the processor being configured to receive at least one image from the at least one camera mounted inside of the container, based on the number of visual indicators visible in the image, determine an empty volume of the container, determining the determined load volume based on the empty volume and a total volume of the container.

In an example embodiment, the at least one received image is captured by the camera in response to detecting that a door of the container has moved to a closed position.

In an example embodiment, the plurality of visual indicators are different colors such that different colors indicate a different distance from an end of the container.

In an example embodiment, determining a mismatch between the detected load volume and the expected load volume includes determining that a difference between the detected load volume and the expected load volume meets a threshold.

In an example embodiment, transmitting the alert comprises transmitting a notification to an electronic device associated with a driver or a dispatcher associated with the container, or transmitting a signal to disable a vehicle that is associated with the container.

In an example embodiment, the processor is further configured to compare the determined load volume to a previous determined load volume to determine a change in load volume, compare the change in load volume to the expected change in load volume, in response to determining a match between the change in load volume and the expected change in load volume, update a status field in a database for a shipper order associated with the load.

In an example embodiment, when the change in load volume indicates that the load has been removed from the container, updating the status includes updating the status to indicate that the load has been delivered, and when the change in load volume indicates that the load has been added to the container, updating the status includes updating the status to indicate that the load is shipped.

In an example embodiment, the processor is further configured to determine a location of the container when the change in load volume is determined, and compare the determined location with an expected location associated with the load, and updating the status includes updating the status in response to determining a match between the determined location and the expected location.

For simplicity and clarity of illustration, reference numerals may be repeated among the figures to indicate corresponding or analogous elements. Numerous details are set forth to provide an understanding of the embodiments described herein. The embodiments may be practiced without these details.

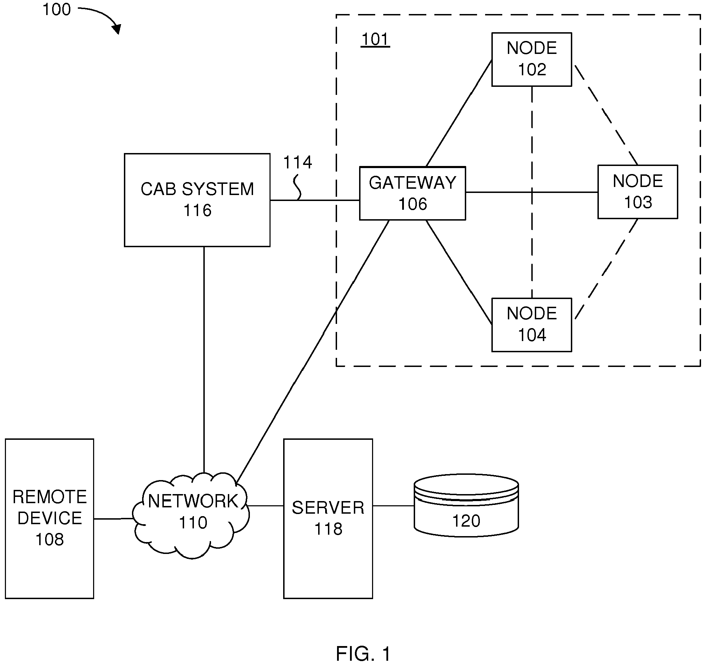

FIG. 1 is a schematic diagram of an example transportation asset management system 100. The transportation assert management system includes a sensor node network 101 that may be included, for example, within a transport container. The example sensor node network 101 shown in FIG. 1 includes three sensor nodes 102 to 104 and a gateway 106. Each sensor node 102 to 104 may establish wired or wireless connections with the gateway 106, as indicated by the solid lines, to facilitate transmitting data to and receiving data from the gateway 106.

Additionally, or alternatively, each sensor node 102 to 104 may establish wired or wireless connections with one or more of the other sensor nodes 102 to 104 of the sensor node network 101, as indicated by the dashed lines, to facilitate transmitting data to and receiving data from the other sensor nodes 102 to 104, forming what is known as a meshed network. In this example, one or more sensor nodes 102 to 104 may communicate with the gateway 106 via one or more of the other sensor nodes 102 to 104 which act as an intermediary, rather than the one or more sensor nodes 102 to 104 transmitting data to the gateway 106 directly.

The sensor nodes 102 to 104 and the gateway 106 may utilize any suitable wired or wireless connection, or a combination of wired and wireless connections, to transmit data to and receive data from each other. For example, the server nodes 102 to 104 and the gateway 106 may utilize a short-range wireless communication protocol such as, for example, Bluetooth®, Bluetooth Low Energy (BLE), IEEE 802.15.4, WiFi®, or Zigbee®, or any combination thereof. In another example, nodes 102, 104a, 104b and the gateway 106 may utilize other suitable radio technologies based on, for example, CDMA2000, 3GPP GERAN, 3GPP UTRAN, 3GPP E-UTRAN (LTE) or 3GPP 5G, or any combination thereof. The sensor nodes 102 to 104 and the gateway 106 may communicate with each other utilizing network-to-device radio links or device-to-device radio links such as 3GPP Proximity-based services (ProSe) making use of a PC5 interface, or a combination of network-to-device and device-to-device radio links.

The sensors included in the sensor nodes 102 to 104 may be any suitable sensors. Suitable sensors may include, for example, one or more of a camera, a temperature sensor, an accelerometer, a light sensor, a sound sensor, a weight sensor a gas sensor, a pressure sensor such as, for example, a tire pressure monitoring sensor (TPMS), a motion sensor, a velocity sensor, a radio frequency identity (RFID) reader, a location sensor utilizing, for example, a global positioning system (GPS), a cargo door open sensor, a light detecting and ranging (LIDAR) sensor, a time of flight (TOF) sensor, a laser camera, and so forth, or any combination of sensors such as, for example, a temperature, pressure, humidity (TPH) sensor.

In an exemplary embodiment, measurements from at least one of the sensor nodes 102 to 104 may be utilized for determining a volume of cargo within the container in which the sensor node network 101 is housed. In an example, the sensors utilized to determine the volume of cargo may be one or more cameras. In other examples, the sensors may be any suitable sensor that may be utilized for determining a volume of cargo within a container. Other suitable sensors may include LIDAR sensors, TOF sensors, and laser cameras.

The type of sensor(s) included in the nodes 102 to 104 and the gateway 106 may depend on, for example, the specific application in which the sensor node network 101 is utilized. In some examples, the different nodes 102 to 104 of the sensor node network 101 may include different sensors. Although the example sensor node network 101 shown in FIG. 1 includes three sensor nodes 102 to 104 and one gateway 106, the sensor node network 101 may include a greater or a fewer number of sensor nodes 102 to 104 and more than one gateway 106.

In the example shown in FIG. 1, the wireless network 100 is connectable with a cab system 116 that is included in a vehicle that, for example, is utilized to transport the container that houses the wireless network 100.

The wireless network 100 and the cab system 116 may be connected by any suitable connection 114. The connection 114 may be any standard connector that is utilized to connect the trailer to the truck including, for example, a J1939/J1962 connector or a SAE560 connector. In another example, the connection 114 may be a wireless connection between, for example, the gateway 106 of the wireless network 100 and the cab system 116.

The cab system 116 may include one or more sensors (not shown) within the vehicle for measuring, for example, fuel consumption, speed, and fuel economy. The cab system 116 may communicate with a remote device 108 via the network 110, similar to the communication between the gateway 106 and one or more remote devices 108 described previously. The cab system 116 may communicate directly with a server (not shown) that may be the same or different than a server that the gateway 106 communicates with directly. For example, the cab system 116 may communication with a cab system server, while the gateway 106 communicates with a separate transportation management system server.

The gateway 106 and the cab system 116 may transmit data to, and received data from one or more servers 118 via a network 110. For example, the gateway 106 may transmit data received from the sensor nodes 102 to 104 to a transportation asset management server, which may store the data in a database 120.

The cab system 116 may communicate directly with the same server 118 that the gateway 106 communicates with, or may communicate directly with a separate server 118. Alternatively, rather than communicating with the server 118 directly, the cab system 116 may communicate with the servers 116 via the gateway 106 of the sensor node network 101. In this example, the data is transmitted from the cab system 116 to the gateway 106 via the connection 114, and the gateway 106 transmits the data to the server 118 via the network 110. Similarly, data from a server 118 for the cab system 116 is received at the gateway 106 and transmitted to the cab system 116 via the connection 114.

The servers 118, and the data stored in the database 120, may be accessed by one or more remote devices 108. The remote devices 108 may be, for example, another server or any other electronic device, or a combination of servers and other electronic devices. Examples of electronic devices include mobile, or handheld, wireless communication devices such as cellular phones, cellular smart-phones, wireless organizers, personal digital assistants, computers, tablet computers, mobile internet devices, electronic navigation devices, and so forth. Electronic devices may then access the data through the server of the transport management system.

The remote devices 108 may also be utilized to transmit orders for shipment of goods, referred to herein as shipping orders, to the transport asset management server 118 via the network 110. The shipping order includes various information related to the shipment, including a pickup location, a destination, and a description of the goods which may include volume and dimension information. The volume and dimension information may be, for example, in units of pallets, or some other standard unit. The information included in the shipping order may be stored in the database 120 and may be utilized to, for example, determine one or more suitable containers for shipping the shipment.

The network 110 may be any suitable wired or wireless network, or combination of wired and wireless networks including, for example, a local area network (LAN), or a wide area network (WAN), or a combination thereof. Wireless communication between the network 110 and any of the gateway 106, the cab system 116, the server 118, and the remote devices 108 may utilize any suitable short-range wireless communication protocol, as described above, or any utilize any suitable cellular communication protocol including, for example, CDMA2000, 3GPP GERAN, 3GPP UTRAN, 3GPP E-UTRAN (LTE) or 3GPP 5G.

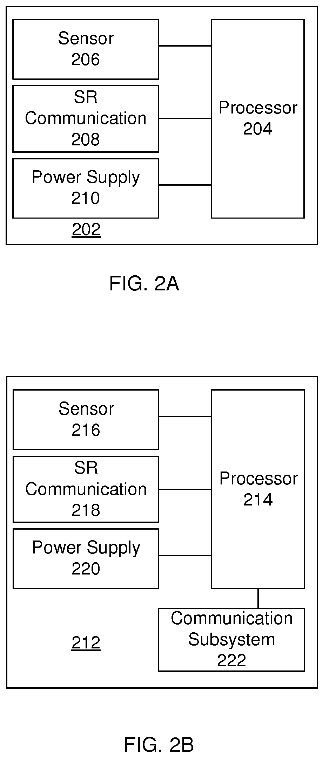

FIG. 2A is a schematic diagram of an example sensor node 202 that may be utilized as, for example, the sensor nodes 102 to 104 of the wireless network 100 shown in FIG. 1. The sensor node 202 includes multiple components, such as a processor 204 that controls the overall operation of the sensor node 202. Sensing functionality is performed by a sensor 206. The sensor 206 may include, for example, one or more of a temperature sensor, an accelerometer, a light sensor, a sound sensor, a pressure sensor, a gas sensor, a TPMS, a motion sensor, an RFID reader, a location sensor, a TPH sensor, a cargo door open sensor, camera, and so forth. In an example, short-range (SR) communication functionality, including receiving and transmitting data with other sensor nodes, or a gateway, or both, is performed by a SR communication subsystem 208. The SR communication subsystem 208 may be configured to communicate with the other nodes via wired or wireless connections, or both wired and wireless connections. The sensor node 202 may also include a power source 210, such as one or more rechargeable batteries, to power the node 202.

FIG. 2B is a schematic diagram of an example gateway 212 that may be utilized as, for example, the gateway 106 of the wireless network 100 shown in FIG. 1. Similar to the sensor node 202, the gateway 212 includes multiple components, such as a processor 214 that controls the overall operation of the gateway 212. The gateway 212 may include all the functionality of the sensor node 202 and therefore may include a sensor 216 that performs a sensing functionality. The sensor 216 may be any suitable sensor and may be determined by the data that is to be sensed. SR communication functionality, including receiving data from and transmitting data to nodes, or another gateway, or both, is performed by a SR communication subsystem 218. The SR communication subsystem 218 may be configured to communicate with the other nodes via wired or wireless connections, or both wired and wireless connections. A power source 220, such as one or more rechargeable batteries or a port to an external power supply, powers the gateway 212. A communication subsystem 222 is utilized to transmit data to, and receive data from, a remote device, such as for example the remote device 108 described above, via a network, such as for example the network 110 described above.

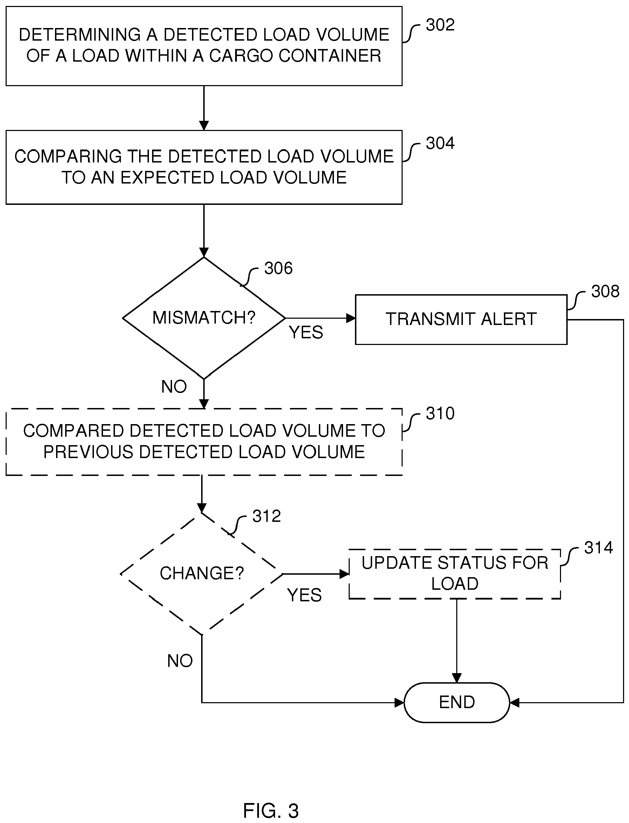

Referring now to FIG. 3, a flow chart illustrating a method for verifying a load in a container is shown. The method may be carried out by software executed by a processor such as, for example, by a processor of a transport asset management server 118 described previously with reference to FIG. 1. In some embodiments, a portion of the method may be performed by a processor of a sensor node, such as processor 204 of the node 202, or processor 214 of the gateway 212, and another portion of the method may be performed by a processor of, for example, a server of a transportation asset management system. Coding of software for carrying out such a method is within the scope of a person of ordinary skill in the art given the present description. The method may contain additional or fewer processes than shown and/or described, and may be performed in a different order. Computer-readable code executable by at least one processor to perform the method may be stored in a computer-readable storage medium, such as a non-transitory computer-readable medium. The computer-readable code may be incorporated into an operating system or may be incorporated into a stand-alone application.

At 302, the volume of a load within a container is determined. The determined volume is referred to as a detected load volume. The detected load volume may be determined utilizing measurements performed by one or more sensor nodes, such as sensor nodes 102 to 104 in the example node system 100 described with reference to FIG. 1. Determining the detected volume load at 302 may be performed using any suitable method.

In an example, described in more detail below, the detected volume may be determined based on one or more images captured by one or more cameras located in the container. The images may be analyzed to determined, for example, the amount of the container that is occupied by the load. Based on known dimensions of the container, a volume of the amount the container occupied by the load may be determined as the detected load volume at 302.

In addition to determine volume, a shape of the load may also be determined at 302. The shape of the load may be determined based on, for example, one or more images captured by cameras located in the container. For example, in addition to determining the overall volume of the load, the images captured by one or more cameras in the container may be utilized to determine the shape of the load as well by generating, for example, a three-dimensional rendering of the load.

Determining the detected load volume at 302 may be performed periodically or in response to a triggering event such as, for example, the closing of a door of the container, the container entering or leaving a geofenced area, or a weight sensor determining that the weight of the container, or the cargo in the container, has changed. The geofenced area may be, for example, an area surrounding a location at which a shipment is to be picked up from or delivered to.

At 304, the detected load volume is compared to an expected load volume. The expected load volume may be stored in a database, such as for example, database 120 of the node system 100 shown in FIG. 1. The expected load volume may be received when an order for shipping the load is placed. The shipment, or portion of the shipment, that is assigned for shipping in a particular container is what is referred to herein as the "load". Based on the volume and dimension information provided in the shipping order, the expected load volume for the load to be loaded into the container may be determined.

The expected load volume may also be determined based on the location of the container. For example, the container may be utilized to ship loads associated with multiple different shipments that are intended for delivery at different locations. In this example, the expected load volume will change as loads associated with additional shipments are picked up or delivered. Utilizing location information associated with the container, a determination of which loads, and their associated expected load volumes, are expected to be within the container at a given time may be made.

At 306, it is determined whether a mismatch between the detected load volume and the expected load volume. A mismatch may indicate that the entire load is not located in the container. The mismatch may be due to, for example, less than the full load being loaded into the container. The mismatch may also indicate that cargo that is not expected to be in the vehicle is present. The mismatch may be due to, for example, loading cargo that is not part of a shipment into the container, or due to unloading less than the full load during delivery. The cargo that is not expected may also be due to, for example, the driver or some other person adding unauthorized cargo to the container. The mismatch may also be due to theft in which all or a portion of the load is removed without authorization.

Determining a mismatch 306 may also include determining a mismatch between a detected shape of the load and an expected shape.

If a mismatch is detected at 306, the process continues at 308 in which an alert is transmitted. The alert may be transmitted by, for example, a server, such as server 118 in the example shown in FIG. 1, via a network, such as network 110. In one example, the alert may be transmitted to a remote device, such as a remote device 108. The remote device 108 may be, for example, an electronic device associated with the driver assigned to drive a vehicle transporting the container in which the load is loaded, or associated with a dispatcher at the location at which the load is loaded into the container. Alternatively, or additionally, the alert may be transmitted to a cab system of the vehicle transporting the container in which the load is loaded, such as the cab system 116 in the example shown in FIG. 1. The alert may be displayed on a display screen of the cab system.

In response to receiving the alert, the cab system may immobilize the vehicle such that the vehicle cannot be driven until confirmation is received. For example, the vehicle may remain immobilized until one or more of a driver or dispatcher, or other authorized person, has inspected the load in the container and provided a confirmation that the load is correct. The vehicle may be immobilized by, for example, the cab system preventing the engine of the vehicle from being started. In this way, the container is inhibited from leaving the location when the detected load volume does not match the expected load volume until the load is verified by, for example, a driver or dispatcher. Alternatively, or additionally, the alert may be transmitted to the gateway, such as the gateway 106, of a sensor node network, which may then cause the container to be immobilized by, for example, causing the wheels of the container to be locked.

If no mismatch is detected at 306, the process may end, or the process may optionally proceed to 310 where detected load volume is compared to a previous detected load volume. The previous detected load volume may be determined by, for example, a previously value for the detected load volume that is stored in the database 120.

The detected load volume is compared to a previous detected load volume in order to optionally determine whether a change in the volume cargo loaded into the container at 312. A change in the volume of the cargo in the container indicates that a shipment has been picked up, when the change is an increase in the volume, or has been delivered, when the change is a decrease in the volume. Alternatively or additionally, a change in load volume may be determined by detecting movement of the load within the container such as, for example, the load, or a portion of the load, within the container being loaded or unloaded from the container. The size or dimensions of the load or portion of the load being moved may be determined in order to determine the change in volume.

When a change in volume has been determined at 312, optionally a status for a shipment associated with the load may be updated at 314. The status may be updated in the information stored in a database, such as the database 120 in the example shown in FIG. 1, that is associated with a shipment that includes the load. In the event that the change is an increase in volume, the status of the shipment may be updated to indicate that the load has been picked up, or is in transit, or the like. In the event that the change is a decrease in volume, the status of the shipment may be updated to indicate that the load has been delivered.

In the event that loads associated with multiple shipments are included in the same container, the change in volume may be associated with a particular one of the shipments based on, for example, the expected load volumes for the multiple shipments, the expected shapes for the multiple shipments, the location of the container, or some combination thereof. For example, the change in volume may be compared to the expected load volume of the shipments to identify a shipment having an expected load volume that corresponds to the change in volume such that the status of that identified shipment may be updated at 314.

Alternatively, or additionally, the pickup location or delivery location of the multiple shipments may be compared to the location of the container at the time the detected load volume is determined at 302 to identify which shipment to update the status for. For example, if a decrease in volume is determined at 312, and the location of the container corresponds to a delivery location for a shipment, then the status of that shipment may be updated to indicate that the load is delivered. Similarly, if an increase in volume is determined at 312, and the location of the trailer corresponds to a pickup location for a shipment, then the status of that shipment may be updated to indicate that the load has been picked up.

Alternatively, or additionally, the shape of the load that has been loaded or unloaded to result in the change in volume may be compared to expected load shapes to determine the load that has been loaded or unloaded. As described previously, the shape of the load may be determined by, for example, the 3 dimensional rendering of the load determining through analysis of the images captured by one or more cameras in the container.

In an example, updating the status at 314 may include sending a notification to a remote device. For example, a notification may be sent to a remote device associated with a customer that placed the shipping order that the shipment has been picked up or delivered, as the case may be. Alternatively, or additionally, the notification may be sent to one or more remote devices associated with, for example, any of the intended recipient of the shipment, a dispatcher of at the location that the shipment is picked up from, and a dispatcher at the location that the shipment is delivered to.

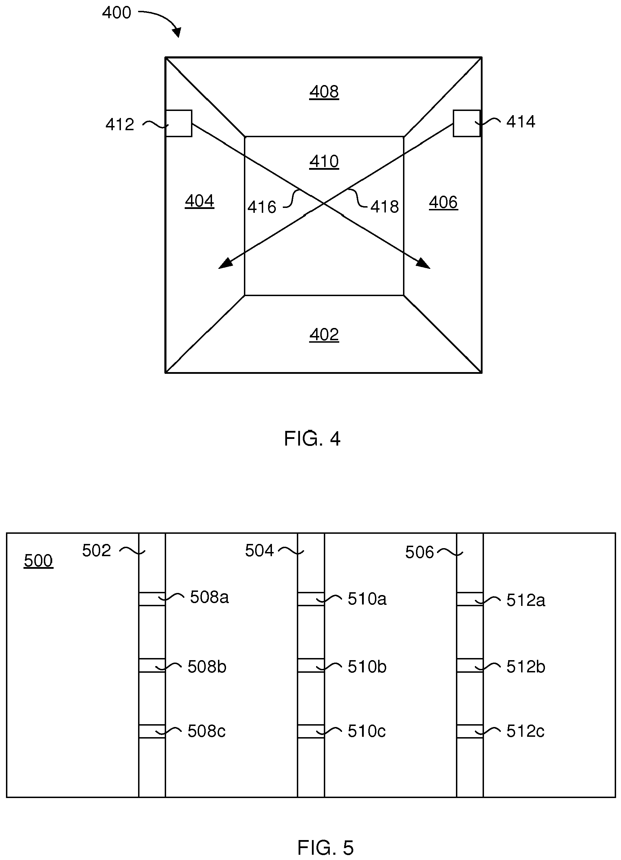

With reference to FIG. 4 and FIG. 5, a particular process for determining a detected load volume within a container is disclosed. The example disclosed utilizes analysis of images captured by one or more cameras mounted within the container to determine the detected load volume. The example process for determining a detected load volume may be performed at 302 of the example method described previously with reference to FIG. 3.

FIG. 4 shows plan view of a container 400. The container 400 may be any container suitable for loading goods for shipping including, for example, a standard shipping container, a transport trailer, or a delivery truck or van. The view shown in FIG. 4 is of the rear of the container 400 with the door or doors (not shown) in an open position. The container 400 includes a bottom wall 402, a left side wall 404, a right side wall 406, a top wall 408, and an end wall 410.

Mounted within the container 400 are cameras 412, 414. In the example shown in FIG. 4, camera 412 is mounted in an upper portion of the left side wall 404 and camera 413 is mounted in an upper portion of the right side wall 406. The cameras 412, 414 are both mounted near the open end of the container 400, opposite the end wall 410. The cameras 412, 414 are mounted facing toward the side wall opposite the side wall they are mounted on, as indicated by the arrows 416, 418 such that, together, the images captured by the cameras 412, 414 include the contents of container 400.

Having two cameras 412, 414 arranged as shown in the example shown in FIG. 4 facilitates imaging both sides of the container 400, facilitates constructing a three dimensional rending of the inside of the container 400, similar to human eyes, and provides redundancy in the event that one of the cameras is obscured or becomes non-functional.

As described previously, the cameras may be nodes of a node sensor network, such as sensor nodes 102 to 104 described previously with reference to FIG. 1. Images from the camera may be transmitted to an electronic device for analysis. The images may be transmitted to a gateway, such as the gateway 106 described previously. The gateway may analyze the images, or may transmit the images to a server, such as server 118 described previously, for analysis.

The images captured by the cameras 412, 414 may be analyzed to determine an amount or volume of space within the container 400 that does not contain cargo. This determination may be performed by assuming that the cargo is loaded right to the end wall 410, and determining, based on the images captured by the cameras 412, 414, the amount of free space in the container between the cargo and the open end. This determination may utilize known dimensions of the container 400, as well as points of reference within the container 400.

For example, the container 400 may include a frame that comprises columns or beams that are visible within the interior of the container 400. The columns may be located at a standard spacing and may be utilized as points of reference within the container. FIG. 5 shows an example of the interior surface of a side wall 500 of a container, such as the container 400. The side wall 500 includes three columns, 502 to 506 that regularly spaced along the distance of the side wall 500. In an example, the number of the columns 502 to 506 that are visible in the images captured by the cameras 412, 414, i.e., not obscured by the cargo, as well as knowledge of the distance between the columns 502 to 506, may be utilized to determine the volume of free space within the container. The difference between the total volume of the container, which may be known, and the determined volume of the free space gives the detected load volume.

Although the example in FIG. 4 shows two cameras arranged on opposite sidewalls, near an open end, it will be apparent that one camera, or more than two cameras, may be mounted in the transport 400 in different arrangements. For example, the cameras 412, 414 may be mounted near the end wall 408, or centrally between the end wall 408 and the open end, rather than near the open end, as shown in FIG. 4. Additionally, other cameras in addition to the two cameras 412, 414 may be installed in the container 400.

In addition, or alternative to using features that are included within the container as points of reference, reflectors may be installed within on the interior surfaces of the walls 402 to 410. The reflectors may be installed at known distances and provide points of reference within the container for determining the volume of free space.

In the example shown in FIG. 5, three reflectors 508a to 508c are located on column 502, three reflectors 510a to 510c are located on column 504, and three reflectors are located on the column 506. In the example shown in FIG. 5, the reflectors are located at the upper, middle, and lower portion of each of the columns 502 to 506 such that each of the columns 502 to 506 is separated by the reflectors into four portions of substantially equal length. The reflectors on each column may be spaced apart by a known distance, e.g., 1 meter. Reflectors may be similarly arranged on the bottom wall 402 and top wall 408 of the container 400, e.g., reflector at the left side, middle, and right side of each column or beam in the bottom wall 402 and the top wall 408.

It is understood that each column including three reflectors 508a-c, 510a-c, 512a-c arranged as shown in FIG. 5 is merely one example, and that in practice any number and any arrangement of reflectors may be utilized.

The reflectors 508a-c, 510a-c, 512a-c may be a bright color to easily identifiable in the images captured by the cameras 412, 414 and to stand out from the color of the wall 500 of the container and the goods loaded in the container. The reflectors 508a-c, 510a-c, 512a-c may be painted onto the columns 502 to 506, or may be stickers that are stuck onto the columns 502 to 506.

In an example, different color reflectors are installed on different columns to increase the visual distinctiveness of each column. In an example, color c1 reflectors 508a-c are installed on column 502, color c2 reflectors 510a-c are installed on column 504, and color c3 reflectors 512a-c are installed on column 506. If the side wall 500 includes more than three columns, the color pattern may be repeated, i.e., c1, c2, c3, c1, c2, c3, etc., or additional colours, c4, c5, etc. may be utilized.

In this example, the volume of the free space in the container is determined based on how many reflectors 508a-c, 510a-c, 512a-c are visible in the images captured by the cameras 412, 414.

This shape information may be utilized, for example, in determining whether an additional load that has a volume that is less than the volume of free space will nevertheless fit into the free space in the container given the shape of the load already loaded in the container. There may be instances, for example, that even through the overall free space of the container is greater the volume of the additional load, due to the shape of the cargo already loaded into the container, and the shape of the additional load, the additional load cannot be loaded into the container.

Embodiments of the present disclosure provides a method for verifying a load in a container based on comparing a detected load volume with an expected load volume. By transmitting an alert in response to identifying when a mismatch between the detected and expected load volumes, errors in pick up or delivery of a load may be identified and remedied before the vehicles leaves the premises, saving time, expense, and inefficiencies in having the vehicle return to the premises at a later time. In some cases the alert may notify a dispatcher that unexpected cargo is present in the container due to, for example, a driver, or some other person, loading unauthorized cargo into the container for the purposes of making an unauthorized shipment in addition to the authorized shipment or shipments. In this way, the present disclosure may inhibit the transportation of illicit good in the container. Further, the alert may identify theft of cargo from a container in a timely manner, which may increase the likelihood that the stolen cargo may be recovered. Determining changes in load volume also facilitates updating the status of a shipment in an automated way, as well as providing notifications to the party shipping the load or the intended recipient indicating the status of the shipment.

Embodiments of the present disclosure further provide for determining a detected load volume utilizing images captured by cameras mounted in a container. Utilizing image analysis facilitates determining the detected load volume, as well as the available free space, within in the container utilizing low cost sensor. Data regarding free space within the container may also be utilized by the transportation asset management system for allocating shipments of other loads in the container, increasing the overall efficiency of a transportation asset management system.

In the preceding description, for purposes of explanation, numerous details are set forth in order to provide a thorough understanding of the embodiments. However, it will be apparent to one skilled in the art that these specific details are not required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A method for a transport management system to verify a load in a container, the method comprising:
determining a detected load volume of the load within the container;
comparing the detected load volume to an expected load volume of the load;
in response to determining a mismatch between the detected load volume and the expected load volume, transmitting an alert.

2. The method according to claim 1, wherein the container includes at least one camera mounted within the container, and a plurality of visual indicators located on inner surfaces of the container, each visible indicator located at a known location within the container; and wherein determining the detected load volume comprises:
receiving at least one image from the at least one camera mounted inside of the container;
based on the number of visual indicators visible in the image, determining an empty volume of the container;
determining the determined load volume based on the empty volume and a total volume of the container.

3. The method according to claim 2, wherein the at least one image is captured by the camera in response to detecting that a door of the container has moved to a closed position.

4. The method according to claim 2 or 3, wherein the plurality of visual indicators are different colors such that different colors indicate a different distance from an end of the container.

5. The method according to any preceding claim, wherein determining a mismatch between the detected load volume and the expected load volume comprises determining that a difference between the detected load volume and the expected load volume meets a threshold.

6. The method according to any preceding claim, wherein transmitting the alert comprises transmitting a notification to an electronic device associated with a driver or a dispatcher associated with the container, or transmitting a signal to disable a vehicle that is associated with the container.

7. The method according to any preceding claim, further comprising:
comparing the detected load volume to a previous detected load volume to determine a change in load volume;
comparing the change in load volume to the expected change in load volume;
in response to determining a match between the change in load volume and the expected change in load volume, updating a status field in a database for a shipper order associated with the load.

8. The method according to claim 7, wherein:
when the change in load volume indicates that the load has been removed from the container, updating the status comprises updating the status to indicate that the load has been delivered; and
when the change in load volume indicates that the load has been added to the container, updating the status comprises updating the status to indicate that the load is shipped.

9. The method according to claim 7, further comprising determining a location of the container when the change in load volume is determined, and comparing the determined location with an expected location associated with the load; and
wherein updating the status comprises updating the status in response to determining a match between the determined location and the expected location.

10. An apparatus to verify a load in a container, the apparatus comprising a processor configured to carry out the method of any preceding claim.

11. A computer program which when executed on a processor of a computing device is configured to carry out the method of any one of claims 1 to 9.
